# NEUE EUROPÄISCHE PATENTSCHRIFT

(11) **EP 2 275 753 B2**
(45) Veröffentlichungstag und Bekanntmachung des Hinweises auf die Entscheidung über den Einspruch: **27.02.2019**
(45) Hinweis auf die Patenterteilung: 23.03.2016
(21) Anmeldenummer: 09008076.3
(22) Anmeldetag: 19.06.2009
(51) Int. Cl.: F24H 3/04, F24H 9/18, B60H 1/22, H01R 4/18, H05B 3/50

(54) **Verfahren zum Herstellen einer elektrischen Heizvorrichtung und elektrische Heizvorrichtung**
Method for manufacturing an electrical heating device and electrical heating device
Procédé de fabrication d'un dispositif de chauffage électrique et dispositif de chauffage électrique

(43) Veröffentlichungstag der Anmeldung: 19.01.2011
(60) Teilanmeldung: 16161091.0
(73) Patentinhaber: Eberspächer catem GmbH & Co. KG, 76863 Herxheim bei Landau (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 1 522 440
- EP-A1- 1 564 503
- EP-A1- 2 017 545
- EP-A2- 1 130 337
- EP-A2- 2 019 268
- DE-U1- 20 105 313

## Beschreibung

Die vorliegende Erfindung betrifft eine elektrische Heizvorrichtung, ein Verfahren zur Herstellung derselben, sowie ein Gehäuse für eine elektrische Heizvorrichtung. Die vorliegende Erfindung betrifft insbesondere ein Gehäuse mit einem Gehäuseunterteil und einem Gehäuseoberteil. Das Gehäuse ist offen, d.h. hat wenigstens zwei sich regelmäßig gegenüberliegende Öffnungen, durch die zu erwärmende Luft hindurchströmt. In dem Gehäuse ist wenigstens ein PTC-Heizelement, welches üblicherweise zwei sich parallel erstreckende Blechbänder und dazwischen angeordnete PTC-Elemente umfasst, sowie wenigstens ein wärmeleitend daran anliegendes Radiatorelement gehalten. Des weiteren sind Kontaktzungen von dem Gehäuse getragen, die zum elektrischen Anschluss der PTC-Heizelemente vorgesehen und mit ausgewählten Blechbändern verbunden sind. Die Kontaktzungen ragen üblicherweise von der Außenseite des als Rahmen ausgebildeten Gehäuses ab und befinden sich innerhalb eines Steckergehäuses, das seitlich von dem Gehäuse abragt.

Eine derartige elektrische Heizvorrichtung ist beispielsweise aus der EP 1 564 503 B1 sowie der EP 2 017 545 A1, EP 1 130 337 A2 und der EP 2 019 268 A2 bekannt.

Bei diesem Stand der Technik werden die Kontaktzungen durch die Blechbänder selbst gebildet. Die Kontaktzungen sind in an dem Gehäuse ausgebildeten Schlitzen gehalten, die in einer Trennwand ausgespart sind, welche eine Aufnahme für das wenigstens eine PTC-Heizelement und das daran anliegende Radiatorelement bildet.

Im Stand der Technik sind elektrische Heizvorrichtungen beschrieben, die auch die vorliegende Erfindung als bevorzugt ansieht, und bei der die einzelnen Lagen innerhalb des Gehäuses, welche die Wärme erzeugen und an die zu erwärmende Luft abgeben, unter Federvorspannung in dem Gehäuse gehalten sind. Diese Lagen werden durch das PTC-Heizelement und das daran anliegende Radiatorelement gebildet. Üblicherweise sind mehrere solcher sich parallel erstreckenden Lagen nach Art eines Schichtaufbaus in dem Gehäuse unter der Vorspannung wenigstens einer außenseitigen Feder gehalten.

Im Hinblick auf einen zuverlässigen elektrischen Anschluss der elektrischen Heizvorrichtung über den Kontaktzungen ist es mitunter zu bevorzugen, diese als separate Stanzteile auszubilden und mit ausgewählten Blechbändern elektrisch zu verbinden (vgl. EP 2 019 268 A2). So werden insbesondere in der Automobilindustrie, in der elektrische Heizvorrichtungen der gattungsgemäßen Art weite Verbreitung gefunden haben, zuverlässige elektrische Steckverbindungen gefordert, da bei ungenauer Kontaktierung und den geforderten Heizleistungen elektrischer Heizvorrichtungen von bis zu etwa 2000 W bei der gegebenen Bordnetzspannung von 12 V Übergangswiderstände an den Kontaktzungen zu thermischen Problemen führen können. So werden die Kontaktzungen mitunter aus Blechstücken gebildet, die durch Stanzbearbeitung in besonderer Weise der Geometrie eines Gegensteckers entsprechen und/oder mit einer Beschichtung versehen sind, durch die bestmöglich elektrischer Strom zwischen der Kontaktzunge und einem Gegenstecker übertragen werden kann. Das Blechband hingegen ist üblicherweise ein lediglich auf Länge geschnittenes Halbzeug, so dass ein Bedarf besteht, die Kontaktzunge mit dem Blechband zuverlässig zu verbinden.

Aus der EP 1 522 440 A1 ist eine Verbindung zwischen einem Heizblock und einem Stromanschluss bekannt. Bei diesem Stand der Technik wird ein weibliches Federkontaktelement mit dem freien Ende eines Blechstreifens durch Umbiegen von zwei Quetschlaschen verbunden, die sich aufgrund von plastischer Verformung dauerhaft an die Oberfläche des Blechstreifens anlegen.

Der vorliegenden Erfindung liegt das Problem zugrunde, ein Verfahren zum Herstellen einer elektrischen Heizvorrichtung anzugeben, mit dem auf einfache und wirtschaftliche Weise eine Kontaktzunge mit einem ausgewählten Blechband verbunden werden kann. Der vorliegenden Erfindung liegt ferner die Aufgabe zugrunde, eine leicht herzustellende elektrische Heizvorrichtung anzugeben, bei der die zunächst separat erstellte Kontaktzunge mit einem Blechband auf einfache Weise und zuverlässig verbunden ist. Die vorliegende Erfindung will ferner ein Gehäuse für eine solche elektrische Heizvorrichtung angeben, welches sich bestmöglich für die Durchführung des erfindungsgemäßen Verfahrens und die Herstellung der erfindungsgemäßen elektrischen Heizvorrichtung eignet.

Zur Lösung des verfahrensmäßigen Problems wird mit der vorliegenden Erfindung ein Verfahren mit den Merkmalen von Anspruch 1 vorgeschlagen. Dieses unterscheidet sich dadurch von dem gattungsbildenden Stand der Technik, dass die Kontaktzunge mit einem ausgewählten Blechband beim Schließen des Gehäuses mittels plastischer Verformung verbunden werden. So können beispielsweise das wenigstens eine PTC-Heizelement und das wärmeleitend daran anliegende Radiatorelement in einen Teil des Gehäuses, beispielsweise das Gehäuseunterteil eingesetzt werden. Ebenso kann eine eventuell den Schichtaufbau unter Vorspannung haltende Feder in das Gehäuse eingesetzt werden. Dies erfolgt vorzugsweise gemäß dem aus der EP 1 564 503 B1 bekannten Vorgehen, bei dem zunächst der Schichtaufbau und das Federelement spannungsfrei in das Gehäuseunterteil eingesetzt werden. Das Schließen des Gehäuses erfolgt dabei vorzugsweise durch Einbringen eines Verdrängers in das Gehäuse, durch welchen der Aufnahmeraum innerhalb des Gehäuses derart verkleinert wird, dass die Feder und damit der in dem Gehäuse aufgenommene Schichtaufbau unter Federvorspannung gesetzt wird. Daher ist für das Schließen des Gehäuses eine nicht unerhebliche Kraft erforderlich, da hierbei nicht nur das Gehäuse geschlossen, sondern auch die Feder unter Vorspannung gesetzt wird.

Hier setzt die Erfindung an. Sie geht insbesondere davon aus, dass das Schließen des Gehäuses mit einem Presswerkzeug erfolgt, welches Anlageflächen zur flächigen Anlage an die Außenseite von Gehäuseunterteil und Gehäuseoberteil hat. Von diesen Anlageflächen ragen konturierte Pressbacken ab, die beim werkzeugunterstützten Schließen des Gehäuses im Überlappungsbereich zwischen der Kontaktzunge und dem Blechband eine plastische Verformung bewirken, durch welche beide Elemente elektrisch miteinander verbunden werden.

Danach ist es möglich, mit einer werkzeugunterstützten Fügebewegung sowohl das Gehäuse zu schließen, als auch vorzugsweise sämtliche elektrische Verbindungen zwischen ausgewählten Blechbändern und den Kontaktzungen zu erzeugen.

Bei der erfindungsgemäßen Verfahrensführung sind üblicherweise keine besonderen Einrichtungen notwendig, das Blechband und die Kontaktzunge zum Herstellen einer Verbindung zu halten. Vielmehr erfolgt die Positionierung der Blechbänder und der Kontaktzungen durch Einsetzen in das Gehäuseteil. Beim Schließen des Werkzeuges wird dann die zuverlässige elektrische Verbindung zwischen der Kontaktzunge und dem zugeordneten Blechband hergestellt.

Gemäß einer bevorzugten Weiterbildung der vorliegenden Erfindung wird die Kontaktzunge mit dem ausgewählten Blechband durch plastisches Verformen einer Quetschverbindung verbunden, die durch Pressbacken erfolgt. Die Pressbacken sind vorzugsweise motorgetrieben und derart ausgebildet, dass sämtliche Kontaktzungen der elektrischen Heizvorrichtung mit den zugeordneten Blechbändern in Folge der Zustellbewegung der Pressbacken plastisch verformt und damit sicher elektrisch verbunden werden. Diese Pressbacken haben gemäß einer bevorzugten Weiterbildung der vorliegenden Erfindung Anlageflächen zum Fügen des Gehäuses und sind damit Bestandteil eines Fügewerkzeuges, welches sowohl geeignet ist, das Gehäuse zu schließen als auch die elektrische Verbindung zwischen den Kontaktzungen und den Blechbändern herzustellen.

Zur Lösung des vorrichtungsmäßigen Problems wird mit der vorliegenden Erfindung eine elektrische Heizvorrichtung der eingangs genannten Art vorgeschlagen, bei der die Kontaktzunge über eine Quetschverbindung mit dem ausgewählten Blechband verbunden ist und die Quetschverbindung beim Schließen des Gehäuses gebildet ist.

Im Hinblick auf eine gute elektrische Kontaktierung zwischen der Kontaktzunge und dem Blechband wird gemäß einer bevorzugten Weiterbildung der elektrischen Heizvorrichtung vorgeschlagen, die Kontaktzunge mit wenigstens einer einteilig daran ausgebildeten Quetschlasche auszubilden, die nach Herstellen der Quetschverbindung das Blechband umgreift. Vorzugsweise sind zwei Quetschlaschen vorgesehen, die vorzugsweise endseitig an der Kontaktzunge nach anfänglicher Stanzbearbeitung abragen und durch Umbiegen aufeinander zu eine Aufnahme ausbilden, in welche das ausgewählte Kontaktblech mit seinem freien Ende eingeschoben werden kann. Nach solcher Vorbereitung muss lediglich die Quetschlasche zur Erzeugung einer

Auf der den Quetschlaschen 44 gegenüberliegenden Innenseite sind an der Kontaktzunge 26 Kontaktvorsprünge 56 durch Stanzbearbeitung ausgebildet, die von der ansonsten ebenen Seitenfläche der Kontaktzunge 26 in Richtung auf die Quetschlaschen 44 abragen.

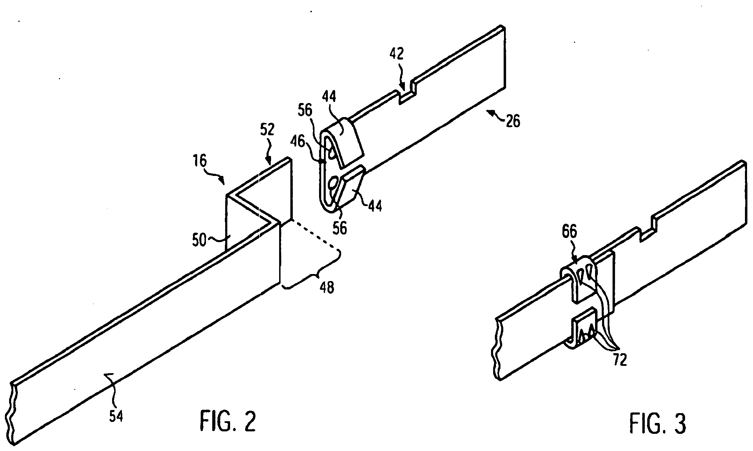

Zum Verbinden von Blechband 16 und Kontaktzunge 26 wird zunächst das freie Ende 52 der Kontaktzunge 26 in die Aufnahme 46 eingebracht, bis das freie Ende 52 die Quetschlaschen 44 überragt (vgl. Figur 3). In diesem Zustand sind zunächst das Blechband 16 und die Kontaktzunge 26 in das Gehäuseunterteil 2 eingebracht.

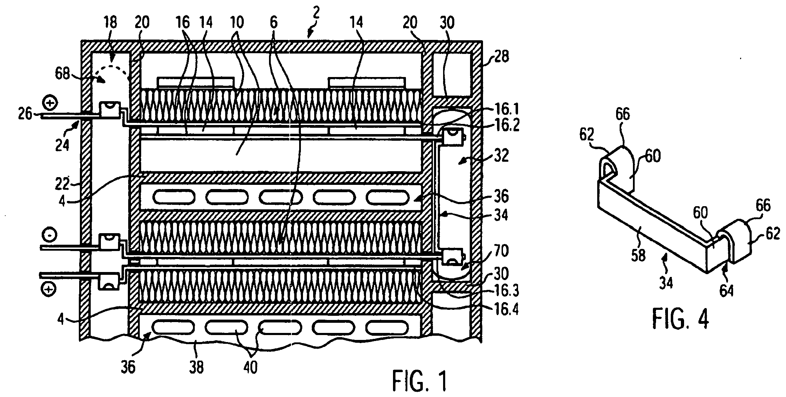

Figur 4 verdeutlicht die Einzelheiten der in Figur 1 gezeigten Kontaktbrücke 34, die einen mittleren Verbindungsschenkel 58 und in etwa rechtwinklig dazu abragende Kontaktschenkel 60 aufweist, die jeweils mit einer Quetschlasche 62 versehen sind. Die Quetschlaschen 62 bilden zwischen sich und dem zugeordneten Kontaktschenkel 60 eine U-förmige Aufnahme 64 aus. Die Kontaktbrücke 34 wird nach Einbringen der Blechbänder 16.2 und 16.3 auf diese aufgelegt, so dass die in das Gefach 32 hineinragenden freien Enden dieser Blechbänder 16.2 und 16.3 in der U-förmigen Aufnahme 64 aufgenommen sind und ein Krümmungsbereich 66 der Quetschlaschen 62 auf der schmalen Stirnseite der Blechbänder 16 aufliegt.

Das derart vorbereitete Gehäuseunterteil wird im Zuge der Herstellung der elektrischen Heizvorrichtung mit einem Gehäuseoberteil abgedeckt, welches jedenfalls eine, die Radiatorelemente 10 freilassende Öffnung aufweist. Das Gehäuseoberteil kann beispielsweise als Gehäusedeckel ausgebildet sein, der lediglich die PTC-Heizelemente 12 und einen Teil der Zwischenräumen zwischen den Trennwänden 20 und den Querholmen 22 bzw. 28 abdeckt. Dabei lässt das Gehäuseunterteil und das Gehäuseoberteil jeweils eine Einbringöffnung frei, deren stirnseitige Begrenzung in Figur 1 mit strichpunktierten Linien angedeutet und mit Bezugszeichen 68 für die Anschlussseite und 70 für die gegenüberliegende Querseite gekennzeichnet.

Dadurch liegen die Verbindungsstellen zwischen der Kontaktbrücke 34 und den zugeordneten Blechbändern 16.2 und 16.3 einerseits sowie den ausgewählten Blechbändern 16.1, 16.3 und 16.4 und den zugeordneten Kontaktzungen 26 andererseits an den gegenüberliegenden Seitenflächen des Gehäuses frei.

Während des Schließens des Ge-häuses kann an diesen Stellen eine Umformbearbeitung stattfinden, durch welche die Kontaktzungen 26 bzw. 62 in vorbestimmter Weise elektrisch mit den Blechbändern 16 kontaktiert werden. Am Ende dieser Umformbearbeitung liegen die Quetschlaschen 44 der Kontaktzungen 26 in etwa parallel zu deren Seitenfläche, die auch die Anlagefläche 54 des Blechbandes 16 bildet. Durch die Umformbearbeitung sind am Kantenbereich des Blechbandes 16 Verformungskerben 72 gebildet, die die Quetschlaschen 44 im Krümmungsbereich 66 durchsetzen und punktuell Kontaktierungsstellen zwischen der Kontaktzunge 26 und dem Blechband 16 ausbilden. Diese Kontaktstellen bewirken üblicherweise auch eine plastische Verformung des Materials der Blechbänder 16. Durch die plastische Verformung der Quetschlaschen 44 sind im übrigen die Kontaktvorsprünge 56 mit Druck gegen das Blechband 16 angelegt. Die Quetschbearbeitung führt zu einer innigen Verbindung zwischen beiden Teilen 16, 26 und einer zuverlässigen Kontaktierung an der Phasengrenze.

Entsprechendes ergibt sich für die Umformbearbeitung der Quetschlaschen 62 der Kontaktbrücke 34. Die Verformungen sowohl der Kontaktbrücke 34 als auch der Kontaktzungen 26 erfolgt vorzugsweise simultan durch gleichzeitiges Einbringen von Pressbacken, die beidseitig auf einander zu in die Einbringöffnungen 68 bzw. 70 eingebracht werden.

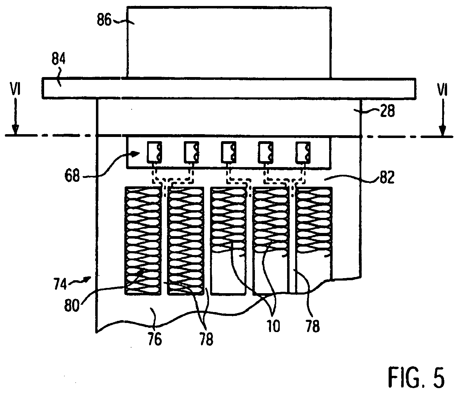

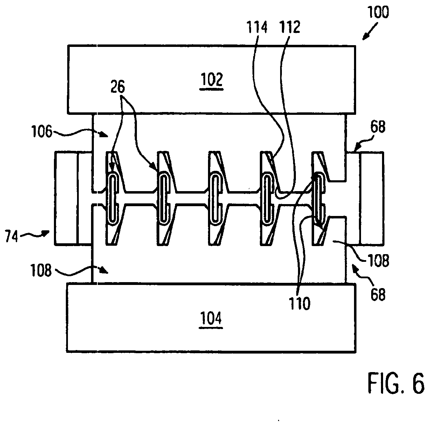

Die Figuren 5 und 6 verdeutlichen ein Ausführungsbeispiel, wobei Figur 5 das anschlussseitige Ende eines mit Bezugszeichen 74 gekennzeichneten Gehäuses verdeutlicht, welches eine durch Querstreben 76 und Längsstreben 78 durchsetzte Durchtrittsöffnung 80 für zu erwärmende Luft ausbildet. In dieser Durchtrittsöffnung 80 liegen lediglich die Radiatorelemente 10 frei. Die zugeordneten PTC-Heizelemente liegen hinter den einzelnen Längsstreben 78 und sind von diesen abgedeckt.

Die Blechbänder ausgewählter PTC-Heizelemente sind seitlich über die Radiatorelemente 10 hinaus verlängert und jeweils mit einem Biegeversatz versehen, so dass deren freien Enden mit etwa gleichmäßigem Abstand in Querrichtung relativ zueinander zwischen den einander gegenüberliegenden Einbringöffnungen 68 des Gehäuses 74 freiliegen. Der Biegeversatz ist vorliegend durch strichpunktierte Linien angedeutet und befindet sich hinter einem Blendsteg 82, der durch das Gehäuseunterteil bzw. Gehäuseoberteil ausgebildet ist und sich quer zu dem Querholm 28 erstreckt. Der Querholm 28 wird durch einen Befestigungsflansch 84 überragt, von dem ein Steckergehäuse 86 abragt, welches sämtliche Kontaktzungen 26 der Heizvorrichtung umgibt und Führungs- bzw. Befestigungsflächen für ein Gegengehäuse eines Gegensteckers ausbildet.

Das in Figur 6 mit Bezugszeichen 100 gekennzeichnete Presswerkzeug hat ein Oberteil 102 und ein Unterteil 104, von dem jeweils einander zugeordnete Pressbacken 106, 108 abragen, die keilförmig zulaufende, sich in Längsrichtung der Blechbänder 16 erstreckende Pressaufnahmen 110 ausbilden, von deren Schrägflächen 112 zwei in Längsrichtung der Blechbänder 16 mit Abstand zueinander vorgesehene Quetschkeile 114 abragen.

Beim Einbringen der Pressbacken 106, 108 in die Einbringöffnungen 68 werden zunächst durch die keilförmige Ausgestaltung der Pressaufnahmen 110 die Blechbänder 16 und die zugeordneten Kontaktzungen 26 ober- und unterseitig umgriffen. Bei fortschreitender Bewegung von Ober- und Unterteil 102,104 aufeinander zu wirken schließlich die Quetschkeile 114 gegen die Krümmungsbereiche 66, so dass diese schließlich die Verformungskerben 72 ausbilden.

Mit dieser Umformbearbeitung werden sämtliche Kontaktzungen 26 zeitgleich und in einem mit den zugeordneten Blechbändern 16 verbunden. Das Gehäuse 74 dient dabei der Positionierung der zu fügenden Teile.

### Bezugszeichenliste

- 2: Gehäuseunterteil
- 4: Trennwand
- 6: Gefache
- 8: Heizstab
- 10: Radiatorelement
- 12: PTC-Heizelement
- 14: PTC-Element
- 16: Blechband
- 18: Einbringgefach
- 20: Zwischenwand
- 22: Querholm
- 24: Aufnahmeschlitz
- 26: Kontaktzunge
- 28: Querholm
- 30: Trennwand
- 32: Gefach
- 34: Kontaktbrücke
- 36: Freiraum
- 38: Abdeckung
- 40: Luftdurchtrittsöffnung
- 42: Halteschlitz
- 44: Quetschlasche
- 46: Aufnahme
- 48: Endbereich
- 50: Biegeversatz
- 52: freies Ende
- 54: Anlagefläche
- 56: Kontaktvorsprung
- 58: Verbindungsschenkel
- 60: Kontaktschenkel
- 62: Quetschlasche
- 64: U-förmige Aufnahme
- 66: Krümmungsbereich
- 68: Einbringöffnung
- 70: Einbringöffnung
- 72: Verformungskerbe
- 74: Gehäuse
- 76: Querstrebe
- 78: Längsstrebe
- 80: Durchtrittsöffnung
- 82: Blendsteg
- 84: Befestigungsflansch
- 86: Steckergehäuse
- 100: Presswerkzeug
- 102: Oberteil
- 104: Unterteil
- 106: Pressbacke
- 108: Pressbacke
- 110: Pressaufnahme
- 112: Schrägfläche
- 114: Quetschkeil

## Patentansprüche

1. Verfahren zum Herstellen einer elektrischen Heizvorrichtung mit einem ein Gehäuseunterteil (2) und ein Gehäuseoberteil umfassenden offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist und das zum elektrischen Anschluss des wenigstens einen PTC-Heizelementes (12) eine Kontaktzunge (26) trägt, die mit einem ausgewählten Blechband (16) verbunden ist,
**dadurch gekennzeichnet,**
**dass** das Schließen des Gehäuses mit einem Presswerkzeug erfolgt, welches Anlageflächen zur flächigen Anlage an die Außenseite von Gehäuseunterteil und Gehäuseoberteil hat, und
das mit seinen von den Anlageflächen abragenden konturierten Pressbacken (106, 108) beim werkzeugunterstützten Schließen des Gehäuses im Überlappungsbereich zwischen der Kontaktzunge (26) und dem Blechband (16) eine plastische Verformung bewirkt, durch welche die Kontaktzunge (26) mit dem ausgewählten Blechband (16) beim Schließen des Gehäuses elektrisch verbunden wird.

2. Verfahren nach Anspruch 1, **dadurch gekennzeichnet, dass** die Kontaktzunge (26) mit dem ausgewählten Blechband (16) durch Pressbacken (106, 108) verbunden wird, die zwichen der Kontaktzunge (26) und dem Blechband (16) eine Quetschverbindung bewirken.

3. Elektrische Heizvorrichtung mit einem ein Gehäuseunterteil (2) und ein Gehäuseoberteil umfassenden offenen Gehäuse, in dem wenigstens ein Blechbänder (16) mit einem dazwischen angeordneten PTC-Element (14) umfassendes PTC-Heizelement (12) und wenigstens ein daran wärmeleitend anliegendes Radiatorelement (10) gehalten ist und das zum elektrischen Anschluss des wenigstens einen PTC-Heizelementes (12) eine Kontaktzunge (26) trägt, die mit einem ausgewählten Blechband (16) verbunden ist,
**dadurch gekennzeichnet,**
**dass** die Kontaktzunge (26) über eine Quetschverbindung mit dem ausgewählten Blechband (16) verbunden ist, und
**dass** eine der Quetschverbindung zugeordnete Einbringöffnung für ein Umformwerkzeug vorgesehen ist, die einen Überlappungsbereich von Kontaktzunge (26) und Blechband (16) frei lässt.

4. Elektrische Heizvorrichtung nach Anspruch 3, **dadurch gekennzeichnet, dass** die Kontaktzunge (26) wenigstens eine einteilig daran ausgebildete Quetschlasche (44; 62) umfasst, die nach Herstellen der Quetschverbindung das Blechband (16) umgreift.

5. Elektrische Heizvorrichtung nach Anspruch 3 oder 4, **dadurch gekennzeichnet, dass** die Quetschlasche (44; 62) wenigstens eine Verformungskerbe (72) aufweist, durch welche die Quetschlasche (44; 62) bis in das darunterliegende Blechband (16) plastisch verformt ist.

6. Elektrische Heizvorrichtung nach Anspruch 5, **dadurch gekennzeichnet, dass** durch die Verformungskerbe (72) das Blechband (16) in einem Kantenbereich desselben kontaktiert.

7. Elektrische Heizvorrichtung nach einem der Ansprüche 3 bis 6, **dadurch gekennzeichnet, dass** Quetschlaschen (44; 62) an voneinander beabstandeten Blechbändern (16) vorgesehen sind, die elektrisch mit einer unterschiedliche Blechbänder (16) kurzschließende Kontaktbrücke (34) verbunden sind.

8. Elektrische Heizvorrichtung nach Anspruch 7, **dadurch gekennzeichnet, dass** eine mit der Kontaktbrücke verbundene Quetschlasche (44; 62) von einer Kontaktzunge überragt ist.

9. Elektrische Heizvorrichtung nach einem der vorherigen Ansprüche, **dadurch gekennzeichnet, dass** zwischen dem Blechband (16) und der Quetschlasche (44; 62) wenigstens ein durch Stanzbearbeitung ausgebildeter Kontaktvorsprung (56) ausgebildet ist.

10. Gehäuse für eine elektrische Heizvorrichtung zur Aufnahme von wenigstens einem Blechbänder (16) und ein dazwischen vorgesehenes PTC-Element (14) umfassenden PTC-Heizelement (12) und wenigstens einem daran wärmeleitend anliegenden Radiatorelement (10) und das zum elektrischen Anschluss des wenigstens einen PTC-Heizelementes (12) eine Kontaktzunge (26) trägt, die mit einem ausgewählten Blechband (16) verbunden ist, mit einem Gehäuseunterteil (2) und einem Gehäuseoberteil, die Öffnung für den Durchtritt von zu erwärmender Luft durch das Gehäuse freilassen,
**gekennzeichnet durch**
eine mehrere Blechbänder (16) im Bereich ihrer Enden freilassende Einbringöffnung (68; 70) für ein Umformwerkzeug, mit dem ausgewählten Blechbänder (16) im Bereich ihrer Enden **durch** Umformen mit zugeordneten Kontaktzungen verbindbar sind.

11. Gehäuse nach Anspruch 10, **dadurch gekennzeichnet, dass** das Gehäuseunterteil (2) und das Gehäuseoberteil jeweils Abdeckungen ausbilden, die sich parallel zueinander erstrecken und in denen die wenigstens eine Öffnung für den Durchtritt von zu erwärmender Luft sowie die Einbringöffnungen (68; 70) ausgespart sind, wobei sich die Einbringöffnungen (68; 70) im wesentlichen parallel zu einem durch das Gehäuseoberteil und das Gehäuseunterteil (2) gebildeten Querholm (22; 28) erstrecken, von dem ein Steckergehäuse (86) zur Halterung eines elektrischen Steckers abragt.

## Claims

1. A method of producing an electric heating device having an open housing which comprises a lower housing component (2) and an upper housing component, at least one PTC heating element (12) comprising sheet-metal strips (16) and a PTC element (14) arranged between said sheet-metal strips (16) and at least one radiator element (10) in heat-conductive contact with said PTC heating element (12) being held in said housing, which, for electrically connecting the at least one PTC heating element (12), carries a contact lug (26) that is connected to a selected sheet-metal strip (16),
**characterized in**
**that** the housing is closed by means of a pressing tool having contact surfaces for planar contact with the outer surfaces of the lower housing component and of the upper housing component,
which pressing tool causes, via its contoured press jaws protruding from said contact surfaces, during the tool assisted closing of the housing in the overlapping area between the contact lug (26) and the selected sheet-metal strip (16) a plastic deformation by means of which the contact lug (26) and the selected sheet-metal strip (16) are electrically connected to one another.

2. A method according to claim 1, **characterized in that** the contact lug (26) is connected to the selected sheet-metal strip (16) by means of press jaws (106, 108), which establish a crimp connection between the contact lug (26) and the sheet-metal strip (16).

3. An electric heating device having an open housing which comprises a lower housing component (2) and an upper housing component, at least one PTC heating element (12) comprising sheet-metal strips (16) and a PTC element (14) arranged between said sheet-metal strips (16) and at least one radiator element (10) in heat-conductive contact with said PTC heating element (12) being supported in said housing, which, for electrically connecting the at least one PTC heating element (12), carries a contact lug (26) that is connected to a selected sheet-metal strip (16),
**characterized in that**
the contact lug (26) is connected to the selected sheet-metal strip (16) via a crimp connection, and
that an insertion opening for a forming tool is provided, which is associated with the crimp connection and which exposes an area where the contact lug (26) and the sheet-metal strip (16) overlap.

4. An electric heating device according to claim 3, **characterized in that** the contact lug (26) comprises at least one crimp piece (44; 62) formed integrally therewith and enclosing the sheet-metal strip (16) when the crimp connection has been established.

5. An electric heating device according to claim 3 or 4, **characterized in that** the crimp piece (44;62) comprises at least one deformation notch (72) through which the crimp piece (44; 62) is plastically deformed down to and into the sheet-metal strip (16) disposed therebelow.

6. An electric heating device according to claim 5, **characterized in that,** through the deformation notch (72), a contact with the sheet-metal strip (16) is established in an edge portion thereof.

7. An electric heating device according to claim 3 to 6, **characterized in that** crimp pieces (44; 62) are provided on spaced-apart sheet-metal strips (16), which are electrically connected to a contact bridge (34) short-circuiting different sheet-metal strips (16).

8. An electric heating device according to claim 7, **characterized in that** a contact lug protrudes beyond a crimp piece (44; 62) connected to the contact bridge (34).

9. An electric heating device according to one of the preceding claims, **characterized in that** the sheet-metal strip (16) and the crimp piece (44; 62) have formed between them at least one contact lug (56) produced by punching.

10. A housing for an electric heating device for accommodating at least one PTC heating element (12) comprising sheet-metal strips (16) and a PTC element (14) arranged between said sheet-metal strips (16), and at least one radiator element (10) which is in heat-conductive contact with said PTC heating element (12), said housing comprising a lower housing component (2) and an upper housing component, in which openings are formed for allowing the air to be heated to flow through the housing,
**characterized by**
an insertion opening (68; 70) suitable for insertion of a forming tool, said insertion opening (68; 70) exposing a plurality of sheet-metal strips (16) in the area of their ends.

11. A housing according to claim 10, **characterized in that** the lower housing component (2) and the upper housing component each define covers which extend parallel to one another and which have formed therein the at least one opening, through which the air to be heated can flow, as well as the insertion openings (68; 70), said insertion openings (68; 70) extending substantially parallel to a transverse beam (22; 28) which is defined by the upper housing component and the lower housing component (2) and from which a connector housing (86) protrudes, said connector housing (86) being used for holding an electric connector.

## Revendications

1. Procédé pour la fabrication d'un dispositif de chauffage électrique avec un carter ouvert, qui comprend une partie inférieure de carter (2) et une partie supérieure de carter, et dans lequel est maintenu au moins un élément chauffant (12) du type PTC (à coefficient de température positif) comprenant des bandes de tôle (16) entre lesquelles est agencé un élément PTC (14), et au moins un élément de radiateur (10) s'y appuyant de manière à assurer la conduction de chaleur, et porte, pour le raccordement électrique dudit au moins un élément chauffant PTC (12), une languette de contact (26) qui est reliée à une bande de tôle (16) sélectionnée,
**caractérisé**
**en ce que** la fermeture du carter s'effectue à l'aide d'un outil de compression ou de pressage, qui possède des surfaces d'appui pour l'appui de surface contre le côté extérieur de la partie inférieure de carter et de la partie supérieure de carter, et
qui, avec ses mors de compression (106, 108) de contour adapté et faisant saillie des surfaces d'appui, produit lors de la fermeture du carter assistée par l'outil, dans la zone de chevauchement entre la languette de contact (26) et la bande de tôle (16), une déformation plastique par laquelle la languette de contact (26) va être reliée électriquement à la bande de tôle (16) sélectionnée, lors de la fermeture du carter.

2. Procédé selon la revendication 1, **caractérisé en ce que** la languette de contact (26) est reliée à la bande de tôle (16) sélectionnée par des mors de compression (106, 108), qui produisent une liaison par écrasement et pincement entre la languette de contact (26) et la bande de tôle (16) .

3. Dispositif de chauffage électrique avec un carter ouvert, qui comprend une partie inférieure de carter (2) et une partie supérieure de carter, et dans lequel est maintenu au moins un élément chauffant (12) du type PTC (à coefficient de température positif) comprenant des bandes de tôle (16) entre lesquelles est agencé un élément PTC (14), et au moins un élément de radiateur (10) s'y appuyant de manière à assurer la conduction de chaleur, et porte, pour le raccordement électrique dudit au moins un élément chauffant PTC (12), une languette de contact (26) qui est reliée à une bande de tôle (16) sélectionnée,
**caractérisé**
**en ce que** la languette de contact (26) est reliée par une liaison par écrasement et pincement à la bande de tôle (16) sélectionnée, et
**en ce qu'**il est prévu une ouverture d'introduction associée à la liaison par écrasement et pincement, pour un outil de formage ou de déformation, et laissant dégagée une zone de chevauchement de la languette de contact (26) et de la bande de tôle (16).

4. Dispositif de chauffage électrique selon la revendication 3, **caractérisé en ce que** la languette de contact (26) possède au moins une patte d'écrasement et de pincement (44; 62) qui y est formée d'un seul tenant, et qui, après l'établissement de la liaison par écrasement et pincement, entoure la bande de tôle (16).

5. Dispositif de chauffage électrique selon la revendication 3 ou la revendication 4, **caractérisé en ce que** la patte d'écrasement et de pincement (44; 62) présente au moins un enfoncement de déformation (72) par lequel la patte d'écrasement et de pincement (44; 62) est déformée de manière plastique jusque dans la bande de tôle (16) située en-dessous.

6. Dispositif de chauffage électrique selon la revendication 5, **caractérisé en ce que** l'enfoncement de déformation (72) assure le contact avec la bande de tôle (16) dans une zone de bordure de celle-ci.

7. Dispositif de chauffage électrique selon l'une des revendications 3 à 6, **caractérisé en ce que** des pattes d'écrasement et de pincement (44; 62) sont prévues sur des bandes de tôles (16) mutuellement espacées, et sont reliées électriquement à un pontet de contact (34) court-circuitant des bandes de tôle (16) différentes.

8. Dispositif de chauffage électrique selon la revendication 7, **caractérisé en ce qu'**une patte d'écrasement et de pincement (44; 62) reliée au pontet de contact est surmontée par une languette de contact.

9. Dispositif de chauffage électrique selon l'une des revendications précédentes, **caractérisé en ce qu'**entre la bande de tôle (16) et la patte d'écrasement et de pincement (44; 62) est formée au moins une protubérance de contact (56) réalisée par un façonnage par matriçage.

10. Carter pour un dispositif de chauffage électrique destiné à recevoir au moins un élément chauffant (12) du type PTC (à coefficient de température positif) comprenant des bandes de tôle (16) entre lesquelles est agencé un élément PTC (14), et au moins un élément de radiateur (10) s'y appuyant de manière à assurer la conduction de chaleur, et porte, pour le raccordement électrique dudit au moins un élément chauffant PTC (12), une languette de contact (26) qui est reliée à une bande de tôle (16) sélectionnée, le carter comprenant une partie inférieure de carter (2) et une partie supérieure de carter, qui laissent dégagée une ouverture pour le passage à travers le carter, d'air à échauffer,
**caractérisé par**
une ouverture d'introduction (68, 70), qui laisse dégagées plusieurs bandes de tôle (16) dans la zone de leurs extrémités, et destinée à un outil de formage ou de déformation à l'aide duquel des bandes de tôle (16) sélectionnées peuvent être reliées, par déformation, à des languettes de contact associées.

11. Carter selon la revendication 10, **caractérisé en ce que** la partie inférieure de carter (2) et la partie supérieure de carter forment respectivement des éléments de recouvrement, qui s'étendent parallèlement l'un à l'autre et dans lesquels sont évidées ladite au moins une ouverture pour le passage d'air à échauffer ainsi que les ouvertures d'introduction (68; 70), les ouvertures d'introduction (68; 70) s'étendant sensiblement de manière parallèle à une traverse (22; 28), qui est formée par la partie supérieure de carter et la partie inférieure de carter (2), et de laquelle fait saillie un boitier de connecteur (86) destiné à supporter un connecteur électrique.
